# EUROPÄISCHE PATENTSCHRIFT

(11) **EP 0 401 542 B1**
(45) Veröffentlichungstag und Bekanntmachung des Hinweises auf die Patenterteilung: **04.08.1993**
(21) Anmeldenummer: 90108955.7
(22) Anmeldetag: 12.05.1990
(51) Int. Cl.: A01D 89/00

(54) **Aufsammler für Erntemaschinen**
Pick-up for harvesters
Ramasseur pour récolteuses

(30) Priorität: 11.07.1989 DE 3922695; 07.06.1989 DE 3918509
(43) Veröffentlichungstag der Anmeldung: 12.12.1990
(73) Patentinhaber: CLAAS SAULGAU GMBH, D-88340 Saulgau (DE)
(72) Erfinder: Gebele, Josef, D-7961 Hosskirch (DE); Rauch, Hans, D-7968 Saulgau-Kleintissen (DE)

(56) Entgegenhaltungen:
- AT-B- 349 815
- CA-A- 1 159 655
- US-A- 2 394 996
- US-A- 3 628 317

## Beschreibung

Die Erfindung bezieht sich auf Aufsammler für Erntemaschinen nach dem Oberbegriff des Anspruches 1.

Aufsammler dieser Art sind zum Beispiel in den US-PS 39 24 391 und 40 15 410 dargestellt. In beiden Fällen dienen die Niederhalter, die vor und/oder über den Aufsammel-Trommeln angeordnet sind, dazu, das Erntegut in dem Wirkbereich der Federzinken der Aufsammeltrommeln zu halten. Die Niederhalter werden in einem Fall durch ein Stabgitter, im anderen Fall durch eine frei drehbare Trommel gebildet. Aufsammler dieser Art befriedigten bei den damals üblichen Fahrgeschwindigkeiten. Die Fahrgeschwindigkeiten haben sich seither, besonders bei selbstfahrenden Feldhäckslern, nahezu verdoppelt. Als Folge davon mußte auch die Umfangsgeschwindigkeit der Federzinken stark erhöht werden. Das hat zur Folge, daß das Erntegut mit hoher Geschwindigkeit nach oben geworfen wird und dadurch den Einlauf unter der Förderschnecke verfehlt oder sich in dem Stabgitter verfängt und dort festgehalten wird. Dadurch leidet die Stetigkeit des Gutflusses und damit die Leistungsfähigkeit der Erntemaschine.

Diese Nachteile sollen durch die Erfindung ausgeschaltet werden. Dies wird durch eine Ausbildung des Leitorganes als Trommel erreicht, deren Mantel so unterhalb der horizontalen Mittelebene der beispielsweise als Förderschnecke ausgebildeten Fördereinrichtung angeordnet ist, daß der Gutstrom unterhalb dieser horizontalen Mittelebene zugeführt wird. Ein so ausgebildeter Aufsammler bewirkt, daß das Erntegut auf einem definierten und reibungsarmen Weg der Einlaufstelle der Fördervorrichtung zugeführt wird.

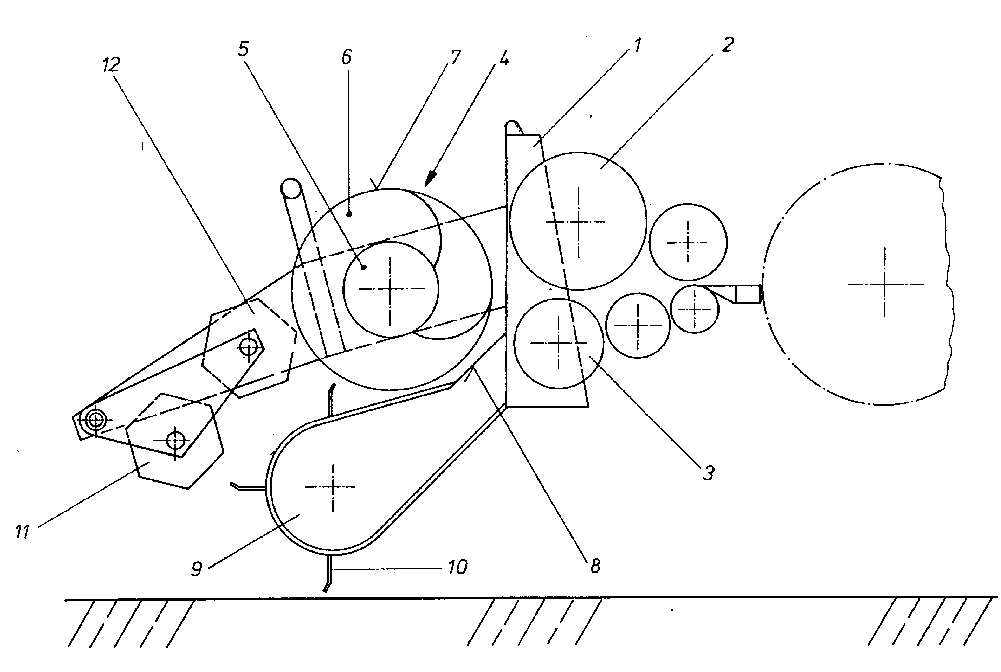

Anhand einer Abbildung wird die Erfindung am Beispiel eines Aufsammlers für einen Feldhäcksler erläutert. Die Abbildung zeigt den Aufsammler in einer Seitenansicht schematisch. In einem Maschinengestell (1) sind gegenläufig angetriebene Einzugswalzen (2, 3) gelagert. In Fahrtrichtung vor den Einzugswalzen (2, 3) läuft eine als Fördereinrichtung dienende Förderschnecke (4) um, die einen Walzenkern (5) und Schnekkengänge (6) besitzt. Die Förderschnecke (4) hat einen Umkreis (7). Unterhalb der Förderschnecke (4) ist ein wannenförmiger Boden (8). An den Boden (8) schließt sich nach vorne eine umlaufende Aufsammeltrommel (9) mit Federzinken (10) an. Vor und teilweise über der Aufsammeltrommel (9) ist ein Niederhalter in Form einer frei drehbaren Trommel (11) höhenbeweglich gelagert. Zwischen der Trommel (11) und dem Umkreis (7) der Förderschnecke (4) ist eine angetriebene oder frei drehbare Walze (12) höhenbeweglich gelagert, die die Funktion eines Leitorganes für den Gutstrom übernimmt. Die Größe der Walze (12) ist so gewählt, daß sie den Freiraum zwischen dem Niederhalter (11) und dem Umkreis (7) der Förderschnecke (4) fast völlig ausfüllt. Dadurch wird das Erntegut, das zwischen der Aufsammeltrommel (9) und dem Niederhalter (11) durch die Federzinken (10) zwangsweise gefördert wird, durch das Leitorgan fast reibungsfrei niedergehalten und in einer solchen Richtung weitergeleitet, daß es ohne weitere Richtungsänderung zwischen den Walzenkern (5) und den Boden (8) einlaufen kann.

## Patentansprüche

1. Aufsammler für Erntemaschinen mit einer mit Federzinken (10) besetzten Aufsammeltrommel (9) und einer darüber und in Fahrtrichtung dahinter angeordneten, um eine Querachse umlaufend angetriebenen Fördereinrichtung (4) sowie einem Vor- und / oder über der Aufsammeltrommel (9) angebrachten Niederhalter (11) für das Erntegut, wobei zwischen dem Niederhalter (11) und der Fördereinrichtung (4) ein den Gutstrom nach oben begrenzendes Leitorgan (12) eingeschaltet ist, dadurch gekennzeichnet., daß das Leitorgan (12) als Trommel ausgebildet ist, deren Mantel so unterhalb der horizontalen Mittelebene der Fördereinrichtung (4) angeordnet ist, daß der Gutstrom unterhalb dieser horizontalen Mittelebene zugeführt wird.

2. Aufsammler für Erntemaschinen nach Anspruch 1, dadurch gekennzeichnet, daß das Leitorgan (12) frei drehbar ist.

3. Aufsammler für Erntemaschinen nach den Ansprüchen 1 und 2, dadurch gekennzeichnet, daß das Leitorgan (12) höhenbeweglich ist.

4. Aufsammler für Erntemaschinen nach einem oder mehreren der Ansprüche 1 - 3, dadurch gekennzeichnet, daß die Fördereinrichtung eine an sich bekannte Förderschnecke (4) ist.

## Claims

1. A pick-up device for harvesters comprising a pick-up drum (9) equipped with spring tines (10), and a conveyor means (4) which is arranged thereabove and therebehind in the direction of travel and which is driven in rotation about a transverse axis, and a hold-down means (11) for the crop material, which is disposed in front of and/or over the pick-up drum (9), wherein interposed between the hold-down means (11) and the conveyor means (4) is a guide member (12) for delimiting the flow of material in an upward direction, characterised in that the guide member (12) is in the form of a drum whose peripheral surface is so arranged below the horizontal central plane of the conveyor means (4) that the flow of material is fed beneath said horizontal central plane.

2. A pick-up device for harvesters according to claim 1 characterised in that the guide member (12) is freely rotatable.

3. A pick-up device for harvesters according to claims 1 and 2 characterised in that the guide member (12) is movable in respect of height.

4. A pick-up device for harvesters according to one or more of claims 1 to 3 characterised in that the conveyor means is a per se known auger (4).

## Revendications

1. Ramasseur pour récolteuses comprenant un tambour ramasseur (9) équipé de dents élastiques (10) et un dispositif transporteur (4) monté au-dessus et à l'arrière dans la direction de la marche, entraîné en rotation autour d'un axe transversal, ainsi qu'un dispositif presseur (11) monté à l'avant et/ou au-dessus du tambour ramasseur (9) pour le produit de la récolte, un organe de guidage (12) étant incorporé entre le dispositif presseur (11) et le dispositif transporteur (4) et limitant le courant du produit vers le haut, caractérisé en ce que l'organe de guidage (12) est constitué sous forme d'un tambour dont l'enveloppe est disposée au-dessous du plan central horizontal du dispositif transporteur (4) de manière que le courant du produit soit dirigé au-dessous de ce plan central horizontal.

2. Ramasseur pour récolteuses selon la revendication 1, caractérisé en ce que l'organe de guidage (12) peut tourner librement.

3. Ramasseur pour récolteuses selon les revendications 1 et 2, caractérisé en ce que l'organe de guidage (12) est mobile en hauteur.

4. Ramasseur pour récolteuses selon une ou plusieurs des revendications 1 à 3, caractérisé en ce que le dispositif transporteur est une vis transporteuse (4) connue en soi.
